Europäisches Patentamt

European Patent Office

Office européen des brevets

(19)

(11) Veröffentlichungsnummer: **0 385 163**
**A1**

## (12) EUROPÄISCHE PATENTANMELDUNG

(21) Anmeldenummer: **90102663.3**

(22) Anmeldetag: **12.02.90**

(51) Int. Cl.5: **H04N 9/80**

(30) Priorität: **01.03.89 DE 3906384**

(43) Veröffentlichungstag der Anmeldung:
**05.09.90 Patentblatt 90/36**

(84) Benannte Vertragsstaaten:
**AT BE DE FR GB IT NL**

(71) Anmelder: **Nokia Unterhaltungselektronik (Deutschland) GmbH**
**Östliche Karl-Friedrich-Strasse 132**
**D-7530 Pforzheim(DE)**

(72) Erfinder: **Reime, Gerd**
**Kelterstrasse 39a**
**D-7131 Wurmberg(DE)**

(54) Verfahren und Anordnung zur Aufzeichnung der Videoinformation einer Videodarbietung auf einem bandförmigen Aufzeichnungsträger.

(57) Eine Anordnung zur Aufzeichnung der Videoinformationen einer Videodarbietung enthält im Übertragungsweg zur Aufzeichnung frequenzmodulierter Videoinformationen eine Frequenzmodulaturanordnung (10) mit einem Steuereingang (28) für Steuersignale (S(Df)), die die dem Signalpegel des Videosignals zugeordneten Frequenzen je nach der Art des Steuersignals um einen bestimmten Frequenzbetrag versetzen. Der Frequenzversatz erfolgt nach einem bestimmten, sich fortlaufend wiederholenden Programm einer Programmschaltung (29). Die so in die Schrägspuren eines bandförmigen Aufzeichnungsträgers (1) von Spur zu Spur in der Frequenz versetzten in Frequenzmodulation aufgezeichneten Videoinformationen bilden bei der Abtastung der einer wiederzugebenden Schrägspur benachbarten Schrägspuren keine störenden Interferenzen in den abtastenden Videoköpfen (14,15), so daß dieses Aufzeichnungsverfahren für die Aufzeichnung und Wiedergabe bei sehr langsamer Bandlaufgeschwindigkeit des bandförmigen Aufzeichnungsträgers (1) verwendet werden kann.

Fig. 1

EP 0 385 163 A1

## Verfahren und Anordnung zur Aufzeichnung der Videoinformationen einer Videodarbietung auf einem bandförmigen Aufzeichnungsträger

Die Erfindung betrifft ein Aufzeichnungsverfahren nach dem Oberbegriff des Anspruches 1, eine Anordnung zur Durchführung dieses Aufzeichnungsverfahrens und eine Anordnung zur Wiedergabe einer nach dem Aufzeichnungsverfahren aufgezeichneten Videoinformation.

Derzeit handelsübliche Videorecorder besitzen neben der normalen Bandlaufgeschwindigkeit von beispielsweise 22 Millimeter/Sekunde zusätzlich noch die Möglichkeit, einen Aufzeichnungsbetrieb und Wiedergabebetrieb mit einer gegenüber der normalen Bandlaufgeschwindigkeit halbierten Bandlaufgeschwindigkeit von z.B. 11 Millimeter/Sekunde zu wählen, den sogenannten Longplay-Betriebszustand, wie beispielsweise der Zeitschrift "Funkschau" 1986, Heft 13, Seite 13, zu entnehmen ist. Dadurch wird die zeitliche Aufnahmekapazität für ein Videoband einer bestimmten Bandlänge verdoppelt, und dadurch auch die Spieldauer handelsüblicher Videobänder in erwünschter Weise verdoppelt. Diese Kapazitätserweiterung der Videobänder bei deren halben Bandlaufgeschwindigkeit wird dadurch erreicht, daß bei einer Aufzeichnung mit der halben Bandgeschwindigkeit die Spurbreite der Schrägspuren auf dem Videoband halbiert wird, so daß bei einer Aufzeichnung mit dem VHS-Aufzeichnungsverfahren im Longplay-Betriebszustand die Schrägspuren nur noch eine Spurbreite von 24 Mikrometer aufweisen. Um selbst bei wechselnden Azimutwinkeln der Aufzeichnung keine Störungen durch Übersprechen bei der Wiedergabe der Aufzeichnung zu erhalten, müssen für den Longplay-Betrieb besondere Videoköpfe mit einer gegenüber den normalen Videoköpfen wesentlich geringeren Spaltlänge verwendet werden. Das Kopfrad eines für Normalbetrieb und Longplay-Betrieb ausgelegten Videorecorders benötigt somit zwei Videokopfpaare, einen für den Normalbetrieb und einen für den Longplay-Betrieb.

Eine weitere Verringerung der Bandlaufgeschwindigkeit führt zu einer so kleinen Spurbreite, daß das Einhalten der Spurbreite beim Aufzeichnen und das Einstellen der Videoköpfe auf die Schrägspur und das Spurhalten der Videoköpfe bei der Wiedergabe nur noch mit einem großen Aufwand durchführbar ist, der in der Konsumgüterindustrie nicht mehr vertretbar ist.

Außerdem kann eine bestimmte Spaltlänge von in großer Stückzahl hergestellter Videoköpfe mit noch vertretbarem Aufwand nicht unterschritten werden, so daß bisherige Bemühungen, die Bandlaufgeschwindigkeit weiter zu senken, keinen Erfolg versprachen.

Der Erfindung liegt die Aufgabe zugrunde, ein Verfahren zur Aufzeichnung von Videoinformationen in die Schrägspuren eines bandförmigen Aufzeichnungsträgers anzugeben, das eine wesentliche Erhöhung der Aufzeichnungskapazität und damit der Bandlaufgeschwindigkeit ermöglicht, ohne daß eine weitere Verringerung der Kopfspaltlänge der Videoköpfe für die Wiedergabe der Aufzeichnung erforderlich ist. Diese Aufgabe wird nach der Erfindung durch die im kennzeichnenden Teil des Anspruches 1 angegebenen Maßnahmen gelöst.

Im Anspruch 8 sind die Merkmale einer Anordnung für die Aufzeichnung einer Videoinformation nach dem Verfahren der Erfindung angegeben, mit denen ebenfalls die der Erfindung zugrunde liegende Aufgabe gelöst wird.

Die Ansprüche 11 und 13 enthalten die Merkmale einer Anordnung zur Wiedergabe nach dem erfindungsgemäßen Verfahren aufgezeichneter Videoinformationen, die ebenfalls zur Lösung der der Erfindung zugrundeliegenden Aufgabe beitragen.

Die Anordnung zur Aufzeichnung von Videoinformationen nach dem erfindungsgemäßen Verfahren und zur Wiedergabe nach diesem Verfahren aufgezeichneter Videoinformationen erfordern keinen zusätzlichen mechanischen Aufwand für die Einrichtungen zur Aufzeichnung dieser Videoinformationen auf einem bandförmigen Aufzeichnungsträger und zur Abtastung dieser Aufzeichnungen von dem Aufzeichnungsträger.

Der zusätzlich erforderliche Aufwand für die Aufzeichnung nach dem erfindungsgemäßen Verfahren und die Wiedergabe nach diesem Verfahren abgetasteter Aufzeichnungen beschränkt sich lediglich auf eine entsprechende Ausbildung der zugehörigen elektronischen Schaltungsanordnungen. Außerdem ist keine höhere Einstellungsgenauigkeit und Laufgenauigkeit wie bei dem bisher üblichen Longplay-Betrieb der Videorecorder erforderlich, so daß diesbezüglich keine zusätzlichen Maßnahmen erforderlich sind. Die vorteilhaften Auswirkungen des neuen Aufzeichnungsverfahrens werden bei der Abtastung der nach dem neuen Verfahren erstellten Aufzeichnung offensichtlich. Ohne eine Anwendung des Aufzeichnungsverfahrens nach der Erfindung mit einem Frequenzversatz treten nach einer Wiedergabe mit der wesentlich geringeren Bandgeschwindigkeit als der im Longplay-Betrieb üblichen Bandgeschwindigkeit in den wiedergegebenen Bildern auf dem Bildschirm in starkem Maße Störungen in der Gestalt von Flitzern, Kantenrauschen und Geisterbilder an senkrechten Kanten und Farbausfälle auf. Diese eine Bildwiedergabe weitgehend unbrauchbar machenden Störungen werden durch das erfindungsgemäße Verfahren nahezu vollständig beseitigt.

Die Unteransprüche kennzeichnen vorteilhafte Ausgestaltungen und Weiterbildungen der Erfindung, die nachfolgend anhand vorteilhafter Ausführungsbeispiele näher erläutert wird. In den zugehörigen Zeichnungen zeigen:

Fig. 1 ein Blockschaltbild einer Anordnung zum Aufzeichnen einer Videoinformation einer Videodarbietung auf einen bandförmigen Aufzeichnungsträger,

Fig. 2 Diagramme a) bis e) zur schematischen Darstellung der Aufzeichnungsart der Videoinformationen in die parallel aneinandergereihten Schrägspuren eines bandförmigen Aufzeichnungsträgers,

Fig. 3 Diagramme a) bis c) zur Darstellung des Frequenzversatzes der Aufzeichnungsfrequenzbänder im aufzuzeichnenden Inhalt benachbarter Schrägspuren,

Fig. 4 einen Bandabschnitt eines bandförmigen Aufzeichnungsträgers mit schematisch dargestellten Schrägspuren,

Fig. 5 ein Ausführungsbeispiel mit einer Frequenzmodulatoranordnung zum gesteuerten Versatz des Aufzeichnungsfrequenzbandes von in Frequenzmodulation aufzuzeichnenden Videoinformationen,

Fig. 6 Diagramme a) bis e) zum Verlauf der Signale der in Fig. 5 dargestellten Frequenzmodulatoranordnung,

Fig. 7 ein weiteres Ausführungsbeispiel einer Frequenzmodulationsansordnung im Übertragungskanal einer Aufzeichnungsanordnung,

Fig. 8 Diagramme a) und b) zur Darstellung des Ausgangssignals eines Videokopfes bei der Abtastung der Schrägspuren eines bandförmigen Aufzeichnungsträgers ohne und mit einem spurweise alternierenden Frequenzversatz der aufgezeichneten frequenzmodulierten Videoinformationen,

Fig. 9 und Fig. 10 je eine Anordnung zur Wiedergabe von Videoaufzeichnungen mit frequenzversetzten Aufzeichnungsfrequenzbändern der einzelnen abgetasteten Schrägspuren eines Videobandes,

Fig. 11 Diagramme a) bis c) zur Darstellung des Verlaufes von Signalen des in Figur 10 dargestellten Teils einer Wiedergabeanordnung.

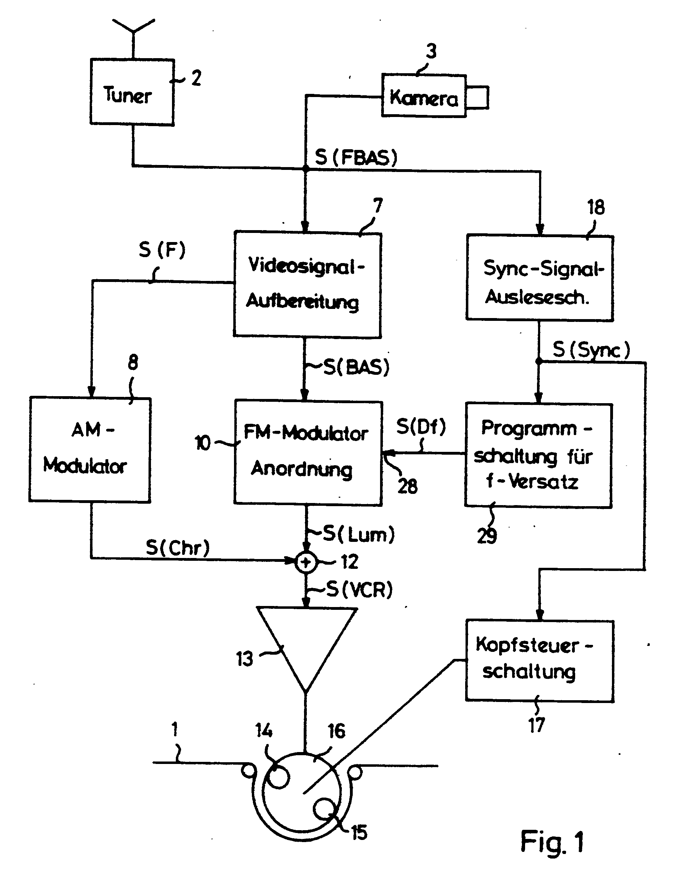

In Figur 1 ist in einem Blockschaltbild die Zusammenschaltung der zur Aufzeichnung einer Videoinformation auf einen bandförmigen Aufzeichnungsträger 1 erforderlichen Funktionsblöcke einer Aufzeichnungsanordnung dargestellt. Eine Videoquelle, beispielsweise ein Tuner 2, der die Videoinformationen einer Videodarbietung empfängt, oder eine Videokamera 3, mit der gerade eine Videodarbietung aufgenommen wird, erzeugt an ihrem Ausgang ein Videosignal in der Gestalt eines FBAS-Signals S(FBAS), das die Videoinformationen in nacheinander erzeugten Videohalbbildern 4 und 5 enthält.

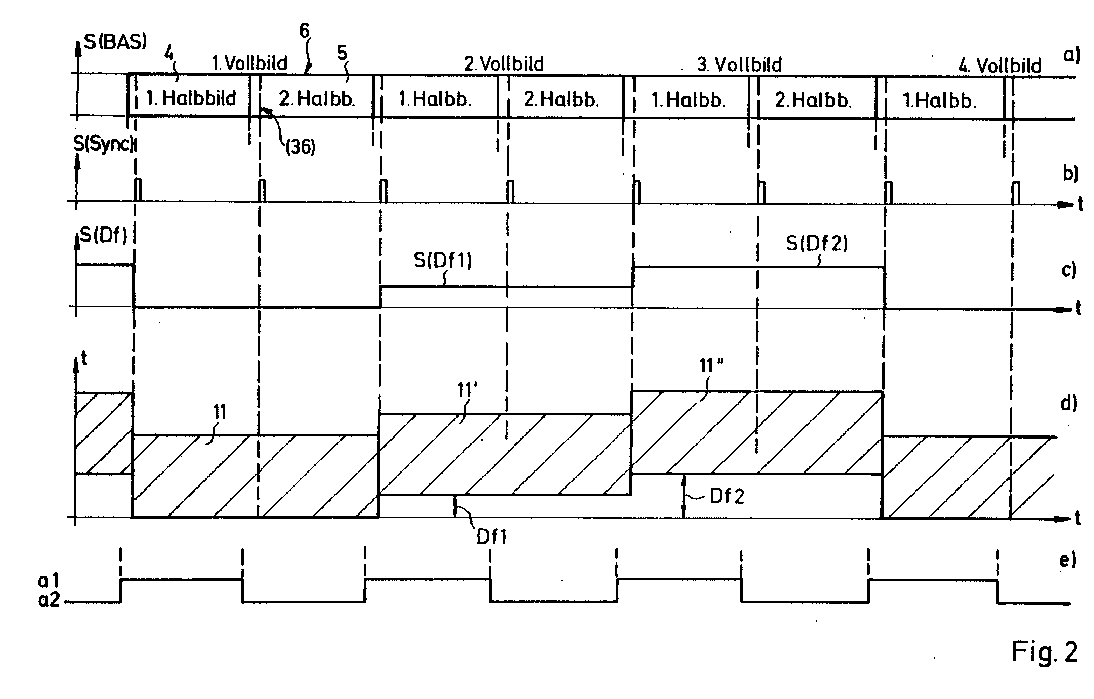

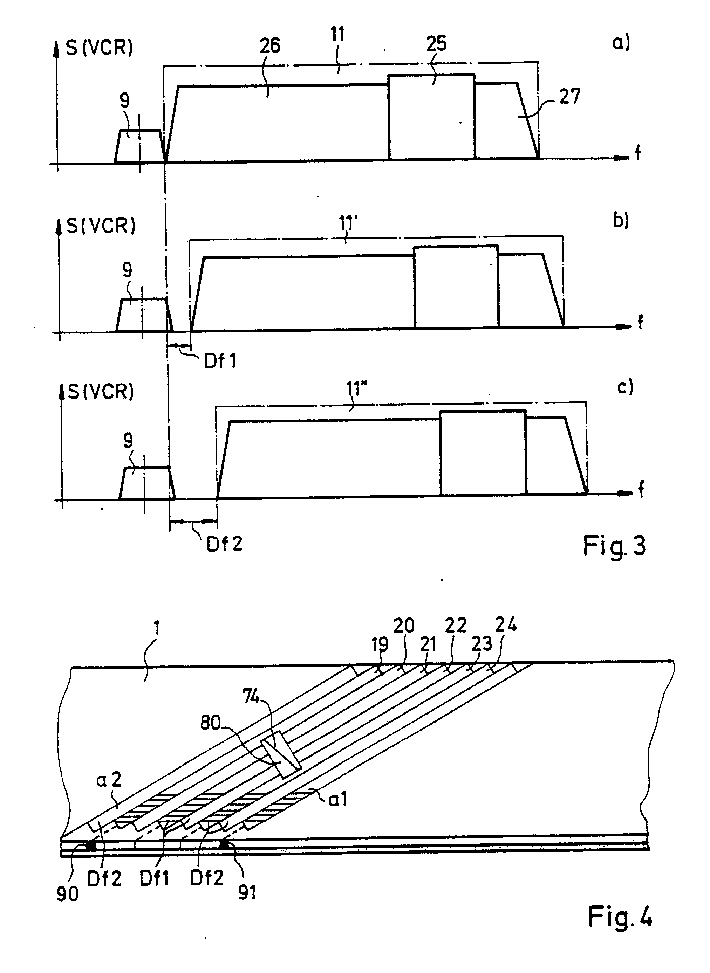

Diese Reihenfolge nacheinander erzeugter Videohalbbilder 4,5 ist in Diagramm a) der Figur 2 schematisch dargestellt. Jeweils ein erstes Videohalbbild 4 und ein zugehöriges darauffolgendes zweites Videohalbbild 5 sind Bestandteil eines Videovollbildes 6. Diese Videosignale S(FBAS) werden in einer Signalaufbereitung 7 in Signale aufgespalten, die die Farbinformationen als Videoinformation S(F) und im wesentlichen die Leuchtdichteinformation als Videoinformationen S(BAS) enthalten. Die die Farbe betreffenden Videoinformationen werden in Amplitudenmodulation übertragen und in einem Frequenzumsetzer 8 in ein Chrominanzfrequenzband 9 umgesetzt, in dem diese Videoinformationen S(Chr) auf das Videoband 1 aufgezeichnet werden. Die im wesentlichen die Leuchtdichte des Videosignals S(FBAS) betreffenden Videoinformationen S(BAS) werden in einer Frequenzmodulatoranordnung 10 in eine Frequenzmodulation umgewandelt und in dieser Frequenzmodulation S-(Lum) in einem von der Aufzeichnungsnorm bestimmten Aufzeichnungsfrequenzband 11 auf dem Aufzeichnungsträger 1 aufgezeichnet. Die Signale beider Frequenzbänder 9 und 11, die im Diagramm a) der Figur 3 schematisch dargestellt sind, werden an einem Additionspunkt 12 zusammengeführt und über einen Aufsprechverstärker 13 den Videoköpfen 14 und 15 eines rotierenden Kopfrades 16 zur Aufzeichnung auf den bandförmigen Aufzeichnungsträger 1 zugeführt. Das Kopfrad wird von einer Kopfsteuerschaltung 17 in Abhängigkeit von den in einer Synchronsignalausleseschaltung 18 aus dem empfangenen Videosignal S(FBAS) ausgelesenen Synchronsignalen S(Sync) so gesteuert, daß jeder Videokopf eine bestimmte Anzahl Videozeilen, im vorwiegenden Ausführungsbeispiel die eines Halbbildes in einer Schrägspur des bandförmigen Aufzeichnungsträgers 1 aufzeichnet.

Auf diese Weise wird auf einem bandförmigen Aufzeichnungsträger 1, von dem ein Bandabschnitt schematisch in Figur 4 dargestellt ist, eine Schrägspur neben die andere Schrägspur gelegt, so daß die Schrägspuren 19 bis 24 quasiparallel unmittelbar nebeneinander liegen und je nach dem Inhalt eines Halbbildes 4 oder 5, nämlich die nacheinander übertragenen Videozeilen eines Halbbildes enthalten.

Jeder Videokopf zeichnet die Schrägspuren mit einem ihm eigenen Azimutwinkel auf, der Videokopf 14 mit dem Azimut a1, der Videokopf 15 mit dem Azimutwinkel a2, so daß die nebeneinander liegenden Schrägspuren alternierend abwechselnde Azimutwinkel aufweisen. Da im Wiedergabebetrieb einer Wiedergabeanordnung jeder Videokopf nur Informationen einer Schrägspur mit einem ihm zugeordneten Azimutwinkel abtasten kann, wird ein Übersprechen beim teilweisen Mitabtasten unmittelbar benachbarter Schrägspuren weitgehend vermieden. Sind die Schrägspuren jedoch infolge einer langsamen Bandgeschwindigkeit beim Aufzeichnen sehr schmal, werden nicht nur gleichzeitig mit der abzutastenden Schrägspur 21 die unmittelbar benachbarten Schrägspuren 20 und 22, sondern auch die entfernter benachbarten Schrägspuren 19 und 23 abgetastet, die den gleichen Azimutwinkel a1 aufweisen wie die abzutastende Schrägspur, wie in Figur 4 dargestellt ist. Dadurch entsteht von den entfernt benachbarten Schrägspuren ein störendes Übersprechen.

Um dieses zu vermeiden, wird in dem in Figur 1 dargestellten Ausführungsbeispiel das Aufzeichnungsfrequenzband 11 der in Frequenzmodulation aufzuzeichnenden Videoinformationen des Inhaltes einer Schrägspur nach jeder zweiten Schrägspur um einen bestimmten Frequenzversatz, zum Beispiel um 100 KHz, versetzt, und zwar in einer bestimmten, sich stets wiederholenden Versatzfolge.

Im Diagramm b) in Figur 3 ist das Aufzeichnungsfrequenzband um einen ersten Frequenzversatz Df1 nach höheren Frequenzen hin und im Diagramm c) um einen weiteren Frequenzversatz Df2 nach höheren Frequenzen hin dargestellt. In dem Aufzeichnungsfrequenzband 11 ist ein Luminanzfrequenzband 25 dargestellt, das die den einzelnen Leuchtdichtewerten zugeordneten Frequenzen umfaßt und an das sich die frequenzmäßig begrenzten Seitenbänder 26 und 27 der Mischfrequenzen dieser Luminanzfrequenzen anschließen. Der Pegel des bei dem Frequenzversatz nicht erfaßten Chrominanzfrequenzbandes 9 ist so klein, daß er von den Pegelbegrenzungen, denen das Aufzeichnungsfrequenzband unterworfen wird, nicht erfaßt wird.

Um diesen Frequenzversatz durchführen zu können, enthält die in Figur 1 dargestellte Frequenzmodulationsanordnung 10 einen Steuereingang 28 für ein Steuersignal S(Df) einer Programmschaltung 29, die für jeden Frequenzversatz Df1 und Df2 ein eigenes Steuersignal S(Df1), S-(Df2) erzeugt, wie in Diagramm b) in Figur 2 schematisch dargestellt ist. Im dargestellten Ausführungsbeispiel erzeugt die Programmschaltung 29 nur bei einem tatsächlichen Frequenzversatz ein dementsprechendes Steuersignal. Der zeitliche Wechsel des Frequenzversatzes findet während einer Videozeile im nicht sichtbaren Bereich eines Videohalbbildes statt, um dadurch hervorgerufene Bildstörungen in den nicht sichtbaren Bereich der Bildwiedergabe zu verlegen, und wird von den ausgelesenen Synchronsignalen S(Sync) gesteuert, wie im Diagramm b) der Figur 2 schematisch angedeutet ist. Das Diagramm d) der Figur 2 zeigt schematisch die zeitliche Übertragung der versetzten Aufzeichnungsfrequenzbänder 11, 11', 11" an, während das Diagramm e) den jeweils einer Schrägspur für die Aufzeichnung der im Diagramm d) dargestellten Aufzeichnungsfrequenzbänder zugeordneten Azimutwinkel a1 und a2 anzeigt.

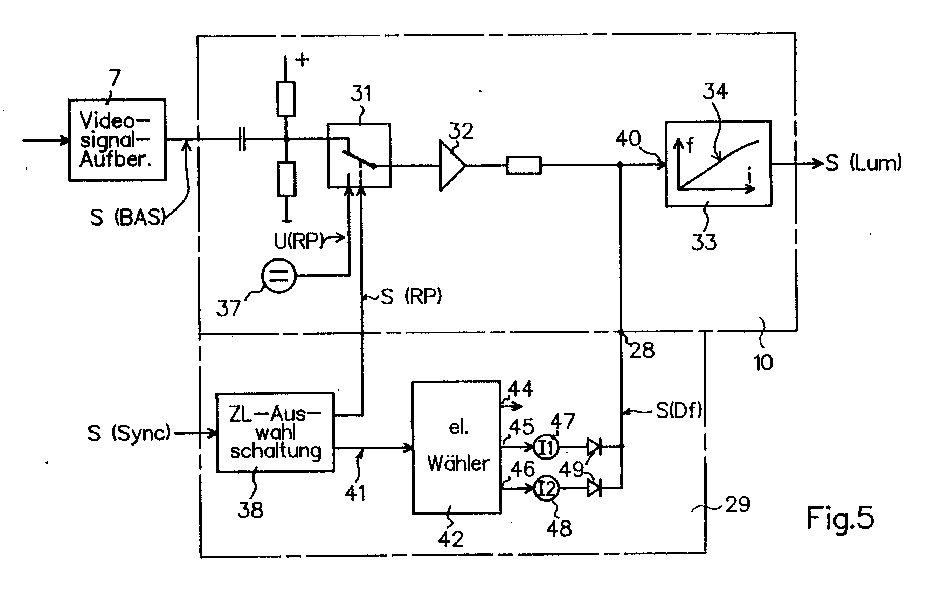

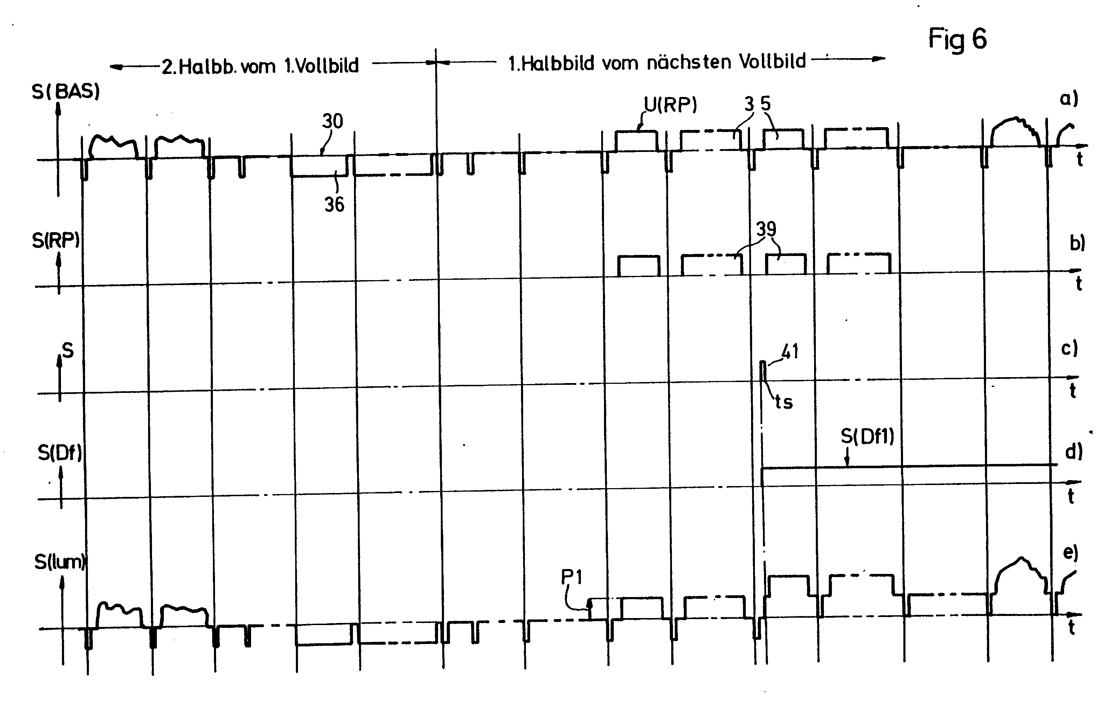

In Figur 5 ist ein Ausführungsbeispiel einer Frequenzmodulationsanordnung 10 dargestellt, das entsprechend den Steuersignalen S(Df) einer Programmschaltung 29 ein zu übertragendes Aufzeichnungsfrequenzband 11 von in Frequenzmodulation aufzuzeichnenden Videoinformationen um einen jeweils bestimmten Frequenzbetrag Df1 oder Df2 versetzt. In Figur 6 ist in den Diagrammen a) bis e) der Verlauf der einzelnen Signale der in Figur 5 dargestellten Schaltungsanordnungen schematisch dargestellt. Das Ausgangssignal S(BAS) der Signalaufbereitungsschaltung 7, das in Diagramm a) der Figur 6 im Bereich des Bildwechsels des zweiten Halbbildes eines ersten Vollbildes zum ersten Halbbild des nachfolgenden Videovollbildes dargestellt ist, weist einen Grundpegel 30 auf, auf den es geklemmt ist, und wird in der Modulaturanordnung 10 über einen elektronischen Umschalter 31 und einen Trennverstärker 32 an einen Frequenzmodulator 33 übertragen, der an einer Modulationskennlinie 34 vom eingangsseitigen Signalstrom abhängige Frequenzen erzeugt.

Auf mehrere Videozeilen 35, die bei der Bildwiedergabe im nicht sichtbaren Bereich um die Bildwechselsignale 36 liegen, wird auf einen bestimmten Teil der die Zeileninformation enthaltenden Zeilenlänge ein Referenzpegelsignal U(RP) gelegt. Das Referenzpegelsignal U(RP) wird von einem Referenzpegelgenerator 37 erzeugt. Eine Zeilenauswahlschaltung 38 erzeugt während der Übertragung der mit einem Referenzpegel zu versehenden Videozeilen jeweils mehrmals ein Schaltsignal S(RP), das jeweils ein Zeitfenster 39 bildet und den elektronischen Schalter 31 so steuert, daß jeweils ein Referenzpegelsignal U(RP) an den Videoeingang 40 des Frequenzmodulators 33 gelegt wird. Die Zeitfenster 39 sind im Diagramm b) der Figur 6 dargestellt. Außerdem erzeugt die Zeilenauswahlschaltung 38 im Zeitbereich des bei der Bildwiedergabe nicht sichtbaren Bildbereiches einen im Diagramm c) der Figur 6 dargestellten Wählerschaltimpuls 41, der einen elektro nischen Wähler 42 an einem bestimmten Zeitpunkt ts (Diagramm d)) einen Schritt weiterschaltet. Dieser Schaltzeitpunkt ts liegt vorzugsweise hinter dem Zeilensynchronsignal 43 (Diagramm a) der Figur 6) einer wenige Zeilen hinter den Bildwechselsignalen 36 gelegenen Videozeile. Der elektronische Wähler 42 ist im dargestellten Ausführungsbeispiel ein Wähler mit drei Wählerschritten, der bei einem Wählerschaltsignal in der Einstellung des dritten Wählerschrittes 46 von diesem auf den ersten Wählerschritt 44 zurückschaltet. In der Stellung des zweiten Wählerschrittes 45 und des dritten Wählerschrittes 46 erzeugt der elektronische Wähler 42 jeweils ein Steuersignal S(Df1) beziehungsweise S-(Df2), das jeweils eine der Wählerstellung zugeordnete Gleichstromquelle 47 beziehungweise 48 einschaltet. Die Gleichstromquellen 47 und 48 sind durch Dioden 49 voneinander entkoppelt und an den Videosignaleingang 40 des Frequenzmodulators angeschlossen. Sie erzeugen im eingeschalteten Zustand im Frequenzmodulator 33 einen zusätzlichen Strompegel, der während dessen Anwesenheit die Ausgangsfrequenzen für das eingangsseitige Videosignal um einen dem zusätzlichen Strompegel entsprechenden Frequenzbetrag versetzen. In der Darstellung der Diagramme d) und e) der Figur 6 wird der elektronische Wähler 42 vom ersten auf den zweiten Wählerschritt geschaltet, auf dem er ab dem Zeitpunkt ts das Steuersignal Df1 erzeugt und damit den Stromgenerator 47 für einen Frequenzversatz von z.B. 100 KHz einschaltet. Der Ausgang des Frequenzmodulators liefert dadurch ein im Diagramm e) schematisch dargestelltes frequenzmoduliertes Ausgangssignal S-(Lum) mit einem ersten Frequenzversatz ab dem Zeitpunkt ts. Beim nächsten in der Figur 6 nicht mehr dargestellten Wähler schaltimpuls 41 der Zeilenauswahlschaltung 38 wird der elektronische Wähler 42 auf den dritten Wählerschritt 46 gesetzt, dessen Steuersignal S(Df2) die zweite Gleichstromquelle 48 einschaltet, deren Strom das im Frequenzmodulator 33 umgesetzte Videosignal um beispielsweise 350 KHz gegen ein nicht versetztes frequenzmoduliertes Aufzeichnungsfrequenzband versetzt.

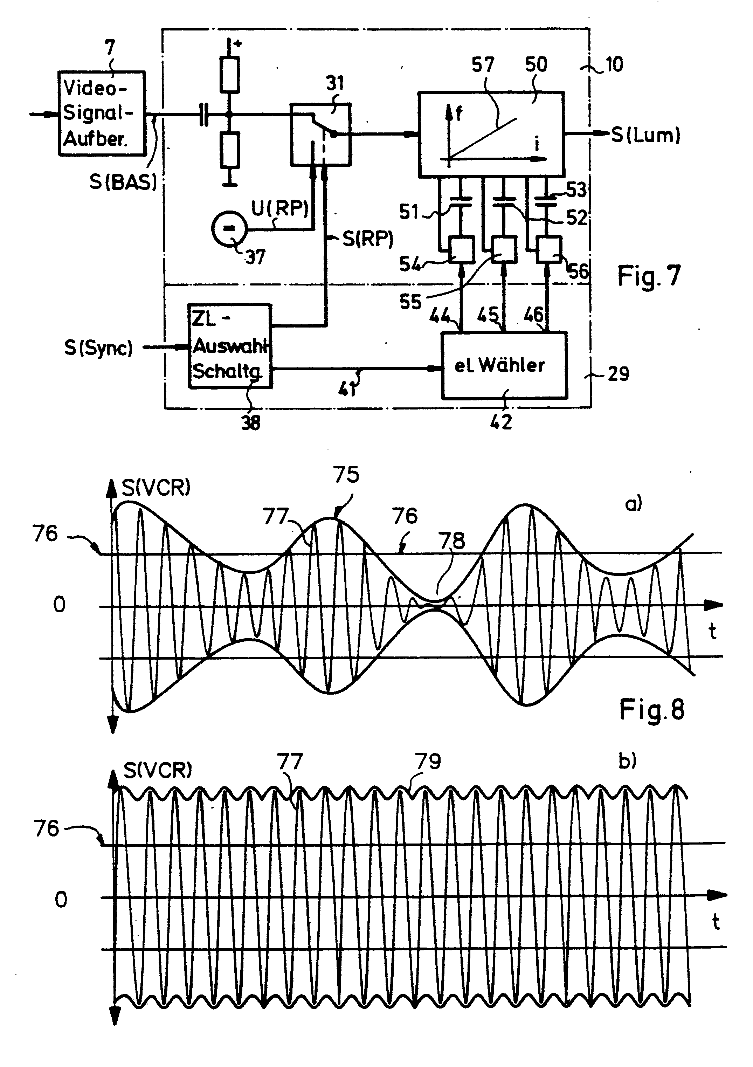

Bei einer in Figur 7 dargestellten Frequenzmodulationsanordnung 10 enthält der Frequenzmodulator 50 drei schaltbare, die Modulationsfrequenz bestimmende Kondensatoren 51 bis 53, die von elektronischen Schaltern 54, 55 und 56 geschaltet werden. Die elektronischen Schalter 54, 55 und 56 werden von den Ausgängen des elektronischen Wählers 42 in einer Weise gesteuert, wie die Gleichstromquellen 47 und 48 der in Figur 5 dargestellten Anordnung, und schalten die Modulationkennlinie 57 des Frequenzmodulators 50 auf den entsprechenden Aufzeichnungsfrequenzbereich um.

Beim Abtasten einer Schrägspur 21 eines bandförmigen Aufzeichnungsträgers 1 durch einen Videokopf 80, der in Figur 4 schematisch durch ein Parallelogramm dargestellt ist, werden die in der Schrägspur 21 als Aufzeichnung enthaltenen magnetischen Feldänderungen im LC-System des Videokopfes in elektrische Schwingungen umgesetzt, die das aufgezeichnete Videosignal S(VRC) darstellen. Da die beiden unmittelbar benachbarten Schrägspuren 20 und 22 mit einem anderen Azimutwinkel a2 aufgezeichnet wurden, als die gerade abgetastete Schrägspur 21 (Azimutwinkel a1), ist deren Einfluß bei den üblichen Bandlaufgeschwindigkeiten nahezu wirkungslos. Ist jedoch die Bandlaufgeschwindigkeit des bandförmigen Aufzeichnungsträgers 1 so klein und sind damit die aufgezeichneten Schrägspuren (19 bis 24) so schmal, daß der wirksame Bereich des Kopfspaltes 74 des abtastenden Videokopfes 80 auch noch in den Wirkungsbereich der zur Schrägspur 21 nur mittelbar benachbarten Schrägspuren 19 und 23 gelangt, tastet der Videokopf 80 außer der wiederzugebenden Schrägspur 21 zwei weitere voll wirksame Schrägspuren ab, deren Videosignale im elektronischen Schwingungssystem des Videokopfes gegenseitig und mit den Signalen der abzutastenden Schrägspur Interferenzen bilden. Da die auf dem bandförmigen Aufzeichnungsträger 1 benachbart aufgezeichneten Schrägspuren die Informationen ebenfalls benachbart aufeinanderfolgender Videohalbbilder enthalten und quasiparallel nebeneinander liegen, werden vom Videokopf 80 teilweise über längere Zeitabschnitte der abgetasteten Schrägspuren nahezu gleiche Videoinformationen abgetastet, die zu einer Schwebung der Hüllkurve 75 der vom Videokopf 80 ausgegebenen Videosignale S(VCR) führen, wie im Diagramm a) der Figur 8 schematisch dargestellt ist. Die Schwebung der Hüllkurve 75 weist teilweise so große Amplitudenschwankungen auf, daß die Hüllkurve im Verlauf der Signalübertragung für ein Videohalbbild die Begrenzungslinien 76 der Begrenzungsschaltungen in nachfolgenden Übertragungsweg einer Wiedergabeanordnung mehrmals wesentlich unterschreitet, mitunter bis zu Auslöschungen des zu übertragenden Videosignals 77 an den Auslöschungsstellen 78. Durch diese von der Schwebung der Hüllkurve verursachten Amplitudeneinbrüche des Videosignals bis hin zur Auslöschung entstehen bei der bildlichen Wiedergabe der abgetasteten Videoinformationen insbesondere an senkrechten Kanten ein störendes Kantenrauschen und Flitzer sowie Geisterbilder und sogar Farbausfälle, die die Bildwiedergabe bis zur Unbrauchbarkeit stören können. Durch den mit dem dargestellten Aufzeichnungsverfahren durchgeführten, in der Spurfolge alternierenden Frequenzversatz jeweils des Aufzeichnungsfrequenzbandes für die in die Schrägspuren aufzuzeichnenden frequenzmodulierten Videoinformationen sind die benachbarten, bei einer Abtastung erfaßten Videohalbbilder frequenzmäßig so weit auseinanderliegend, daß die Hüllkurve 79 der vom abtastenden Videokopf 80 ausgegebenen Videosignale S(VCR) nur noch eine geringe Schwebung aufweist, die die Begrenzerlinie 76 der nachfolgenden Übertragungsanordung einer Wiedergabeanordung nicht mehr unterschreitet, wie aus dem Diagramm b) zu ersehen ist.

Da mit abnehmender Breite der Schrägspuren auch die ein Übersprechen vermeidende Wirkung des alternierenden Versatzes des Azimutwinkels der Aufzeichnung benachbarter Schrägspuren geringer wird und damit Interferenzen mit den unmittelbar benachbarten Schrägspuren stärker werden, wird in einem Ausführungsbeispiel des Aufzeichnungsverfahrens, bei dem bestimmte Aufzeichnungsfrequenzbereiche im Übertragungsweg zur Aufzeichnung um bestimmte Frequenzbeträge versetzt werden, jeder folgenden Schrägspur 19 bis 24 ein anderer, gegenüber dem benachbarten Schrägspuren verschiedener Frequenzversatz des Aufzeichnungsfrequenzbandes der auf diese Schrägspuren in Frequenzmodulation aufzuzeichnenden Videoinformationen zugeordnet. Dieser Frequenzversatz erfolgt wiederum in einer sich alternierend in gleicher Weise wiederholenden Reihenfolge, z. B. um 190 kHz, 420 kHz, 300 kHz und 90 kHz gegenüber dem einen in dieser Gruppe nicht versetzt übertragenen und in eine Schrägspur dieser Gruppe aufzuzeichnenden Aufzeichnungsfrequenzband in Frequenzmodulation aufzuzeichnender Videoinformationen.

Die Schrägspuren, deren aufgezeichnetes Aufzeichnungsfrequenzband für frequenzmodulierte Videoinformationen keinen Frequenzversatz aufweisen, können zusätzlich durch ein Steuersignal 90 (Fig.4) auf einer Steuersignalspur 91 des bandförmigen Aufzeichnungsträgers 1 besonders gekennzeichnet werden.

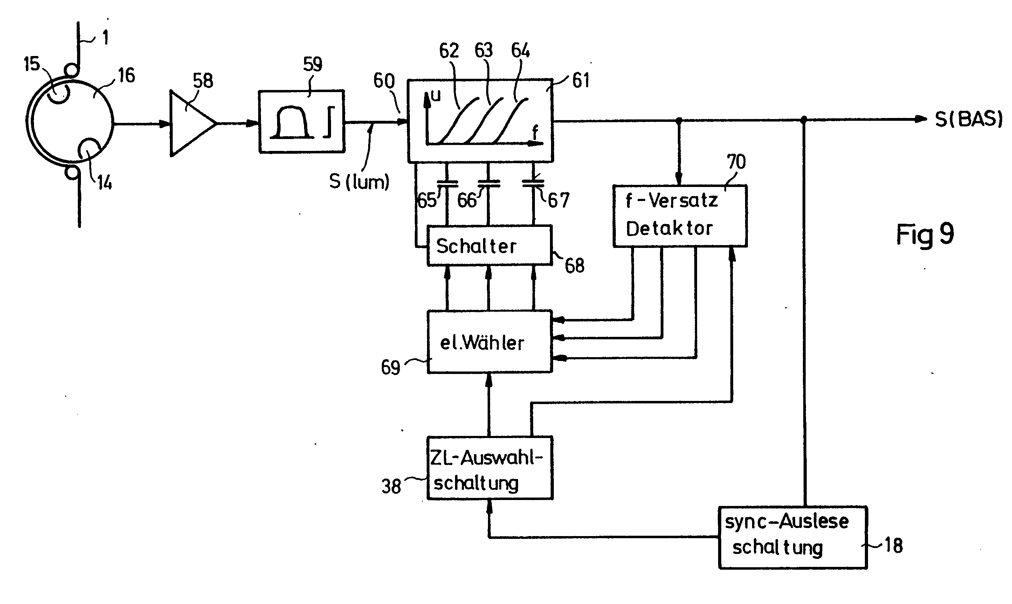

In Figur 9 ist in einem Blockschaltbild ein Ausschnitt einer Wiedergabeanordnung mit einer Demodulatoranordnung dargestellt, die zur Frequenzdemodulation von in einem bestimmten Aufzeichnungsfrequenzband aufgezeichneter Videoinformationen vorgesehen ist und die bei der Demodulation frequenzversetzter Aufzeichnungsfrequenzbänder den jeweiligen Frequenzversatz des abgetasteten Aufzeichnungsfrequenzbandes ausgleicht. Die von den Videoköpfen 14 und 15 eines Kopfrades 16 der Wiedergabeanordnung vom bandförmigen Aufzeichnungsträger 1 abgetasteten Videoinformationen werden als Videosignal S(VCR) über einen Kopfverstärker 58 und eine Filterund Begrenzerschaltung 59 dem Signaleingang 60 eines Frequenzdemodulators 61 zugeleitet. Der Frequenzdemodulator 61 wandelt das frequenzmodulierte Videosignal an einer seiner Demodulationskennlinien 62, 63 oder 64 in ein amplitudenmoduliertes Videosignal S(BAS) um. Die drei Demodulationskennlinien 62, 63 und 64 werden durch drei Kondensatoren 65, 66 und 67 bestimmt, die mittels eines elektronischen Schalters 68 wahlweise an den Frequenzdemodulator angeschlossen werden können. Die Auswahl trifft ein Frequenzversatzdetektor 70 am Ausgang des Frequenzdemodulators 61. Dieser stellt zu bestimmten, in einer Zeilenauswahlschaltung 38 eingestellten Zeitpunkten den Betrag des Frequenzversatzes des Aufzeichnungsfrequenzbereiches der in Frequenzmodulation aufgezeichneten Videoinformationen fest und wählt danach den erforderlichen folgenden Wählerschritt eines elektronischen Wählers 69 vor. Der elektronische Wähler 69, dessen Ausgänge 71, 72 und 73 den elektronischen Schalter 68 so steuern, daß der dem aktiven Wähleraugang 71 zugeordnete Kondensator (65) an den Frequenzdemodulator 61 angeschaltet ist, wird von den darauffolgenden Wählerschaltimpulsen 41 eines in entsprechender Weise wie bei den in den Figuren 5 und 7 dargestellten Aufzeichnungsanordnungen von den Synchronsignalen S-(Sync.) einer Synchronsignalausleseschaltung 18 gesteuerten Zeilenauswahlschaltung 38 aktiviert.

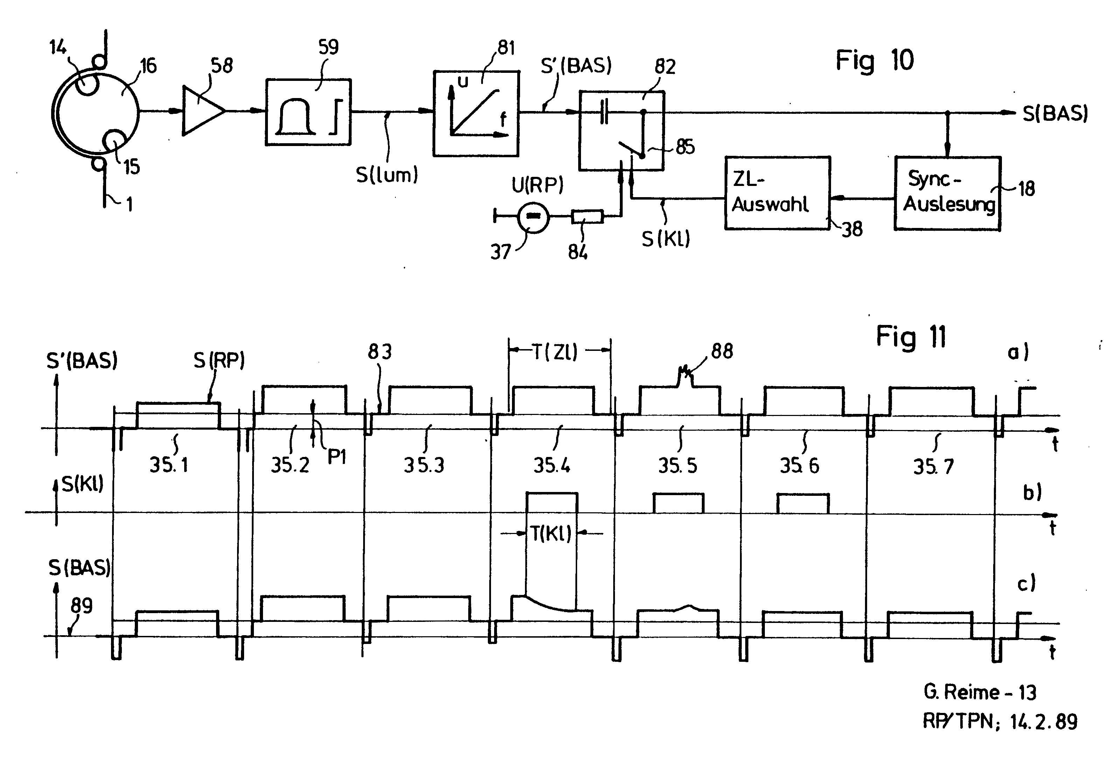

In Figur 10 ist in einem Blockschaltbild ein Ausschnitt einer weiteren Wiedergabeanordnung dargestellt, der sich von dem in Figur 9 dargestellten Ausschnitt dadurch unterscheidet, daß er anstelle eines umschaltbaren Frequenzdemodulators, eines diesen einstellenden elektronischen Wählers und eines diese Wählereinstellung vorwählenden Frequenzversatzdetektors einen auf eine einzige Demodulationkennlinie abgestimmten Frequenzdemodulator 81 und eine diesem nachgeschaltete Klemmschaltung 82 enthält. Der Frequenzdemodulator 81 wandelt das frequenzmodulierte, vom bandförmigen Aufzeichnungsträger 1 abgetastete Videosignal S(Lum) in ein amplitudendemoduliertes Videosignal $\overset{'}{S}$(BAS) um, das den Frequenzversatz als Pegelversatz enthält. Von diesem Videosignal $\overset{'}{S}$(BAS) sind im Diagramm a) der Figur 11 mehrere im Zeileninformationsbereich mit einem Referenzpegel S(RP) versehene Videozeilen 35.1 bis 35.7 aus dem Bereich der nicht abgebildeten Videozeilen dargestellt. Ab einem Zeitpunkt tv ist in dem dargestellten Ausführungsbeispiel die Schwarzschulter 83 der vom Frequenzmodulator 82 ausgegebenen Videozeilen 35.3 und folgende um einen Pegelwert P1 versetzt, der einen falschen Grauwert für das der Bildwiedergabe übertragene Zeilensignal verursacht. Mit der Klemmschaltung 82 wird während eines bestimmten Zeitabschnittes T(K1) der Zeileninformationszeit T(ZI) an eine der oben genannten Videozeilen 35.3 bis 35.6 die Referenzspannung U(RP) einer Referenzpegelquelle 37 über einen Klemmpegelschalter 85 und einen Widerstand 84 als Klemmpegel an die wiedergabeseitige Signalleitung 86 angelegt. Der Zeitabschnitt T(K1) der Klemmung wird durch Klemmsignale S-(K1) einer von den Synchronsignalen einer Synchronsignalausleseschaltung 18 gesteuerten Zeilenauswahlschaltung 38 festgelegt. Die Klemmsignale S(K1) sind im Diagramm b) der Figur 11 schematisch dargestellt. Während des Anliegens der Referenzpegelquelle 37 wird die Hüllkurve des Zeilensignals der gerade übertragenen Videozeile 35.4 auf den Referenzpegel U(RP) der Referenzpegelquelle 37 gezogen und zwar mit einer durch den Widerstand 84 und den Klemm kondensator bestimmten Zeitkonstante, wie dies im Diagramm c) der Figur 11 dargestellt ist. Durch die Zeitkonstante wird vermieden, daß eine den Videosignalen überlagerte Störung 88, wie eine auf dem Videosignal der Videozeile 35.5 angedeutet ist, als Bezugspegel wirksam wird und eine Rückführung der folgenden Videozeilen auf den Normalpegel 89 der Schwarzschulter der Videozeile des ausgangsseitigen Videosignals S(BAS) erhalten.

## Ansprüche

1. Verfahren zur Aufzeichnung der Videoinformation einer Videodarbietung auf einen bandförmigen Aufzeichnungsträger, auf den bestimmte Videoinformationen in einem bestimmten Aufzeichnungsfrequenzband in Frequenzmodulation aufgezeichnet werden und auf den die Videoinformationen mittels der Videoköpfe eines rotierenden Kopfrades einer Aufzeichnungsanordnung in quasiparallel unmittelbar nebeneinander liegende Schrägspuren des Aufzeichnungsträgers aufgezeichnet werden, von denen der Inhalt einer Schrägspur eine bestimmte Anzahl Videozeilen nacheinander übertragener Videohalbbilder ist, **dadurch gekennzeichnet**, daß die Aufzeichnungsfrequenzbänder (11, 11$'$, 11$''$) der nacheinander übertragenen Inhalte für die Schrägspuren (19 ... 24) des bandförmigen Aufzeichnungsträgers (1) nach einem bestimmten, sich wiederholenden Programmablauf nacheinander um einen bestimmten Frequenzbetrag (Df1, Df2) gegeneinander versetzt werden.

2. Aufzeichnungsverfahren nach Anspruch 1, **dadurch gekennzeichnet**, daß die Schrägspuren (19...24) des Aufzeichnungsträgers (1) zusätzlich mit von Schrägspur (20) zu Schrägspur (21) abwechselndem Azimutwindel (a1, a2) der Videoköpfe (14 ,15) des rotierenden Kopfrades (16) aufgezeichnet werden.

3. Aufzeichnungsverfahren nach Anspruch 2., **dadurch gekennzeichnet**, daß die beiden benachbarten, je den Inhalt eines Videohalbbildes (4, 5) für ein gemeinsames Videovollbild (6) umfassende Schrägspuren (21, 22) keinen gegenseitigen Frequenzversatz ihrer Aufzeichnungsfrequenzbänder (11, 11$'$) aufweisen

4. Aufzeichnungsverfahren nach Anspruch 1 oder 2, **dadurch gekennzeichnet**, daß in einer beliebigen Gruppe einer bestimmten Anzahl unmittelbar aufeinanderfolgender Inhalte nebeneinander liegender Schrägspuren (20...24) der Frequenzversatz des einem Inhalt einer Schrägspur (21) zugeordneten Aufzeichnungsfrequenzband zum Aufzeichnungsfrequenzband des Inhaltes der ersten Schrägspur (30) der Gruppe verschieden ist vom Frequenzversatz jedes dem Inhalt einer anderen Schrägspur (22, 23, 24) der Gruppe zugeordneten Aufzeichnungsfrequenzbandes bezüglich dem Aufzeichnungsfrequenzband des Inhaltes der ersten Schrägspur der Gruppe.

5. Aufzeichnungsverfahren nach einem der Ansprüche 1 bis 4, **dadurch gekennzeichnet**, daß die Beträge des Frequenzversatzes (Df) der Aufzeichnungsfrequenzbänder (11, 11$'$, 11$''$) voneinander im Bereich von einigen 10 kHz bis einigen 100 kHz liegen.

6. Aufzeichnungsverfahren nach einem der vorhergehenden Ansprüche, **dadurch gekennzeichnet**, daß das dem Inhalt einer Schrägspur zugeordnete Aufzeichnungsfrequenzband (11$'$) ab einer bestimmten Videozeile (35) der im Bereich zwischen zwei aufeinanderfolgenden Videohalbbildern (4, 5) übertragenen, nicht zur Abbildung vorgesehenen Videozeilen um den bestimmten, dem Aufzeichnungsfrequenzband dieses Inhaltes zugeordneten Betrag (Df1) des Frequenzversatzes versetzt wird.

7. Aufzeichnungsverfahren nach Anspruch 6, **dadurch gekennzeichnet**, daß auf bestimmte Videozeilen (35) aus dem nicht abzubildenden Bereich der Videohalbbilder ein bestimmter Bezugspegel (S(RP)) aufgeprägt wird.

8. Anordnung zur Durchführung eines Aufzeichnungsverfahrens nach einem der Ansprüche 1 bis 7 mit einer Frequenzmodulatoranordnung, die in einem Übertragungskanal für die bestimmten, in einem bestimmten Aufzeichnungsfrequenzband in Frequenzmodualtion auf den bandförmigen Aufzeichnungsträger aufzuzeichnenden Videoinformationen angeordnet ist, **dadurch gekennzeichnet**,
- daß die Frequenzmodulatoranordnung (10) einen Steuereingang (28) enthält, an dem ein Steuersignal (S(Df)) die den Signalpegeln der Videoinformation zugeordneten, in der Frequenzmodulatoranordnung erzeugten Frequenzen zusätzlich um einen vom Steuersignal abhängigen Frequenzbetrag (Df) versetzt,
- und daß eine von einer Zeilenauswahlschaltung (38) gesteuerte Programmschaltung (29) nach einem bestimmten, sich wiederholenden Programm Steuersignale zur Einstellung eines bestimmten Freqeunzversatzes (Df) des Aufzeichnungsfrequenzbandes (11$'$) jeweils des übertragenen Inhalts einer Schrägspur (21) erzeugt.

9. Anordnung nach Anspruch 8, **dadurch gekennzeichnet**,
- daß die Modulatoranordnung (10) eine Gleichstrom- oder Gleichspannungsquelle (47, 48) enthält, die an den Videosingaleingang (40) des Modulators der Modulatoranordnung angeschlossen ist und an der bestimmte, dem geforderten Frequenzversatz (Df1, Df2) entsprechende Grundpegel (P1, P2) des übertragenen Videosignals einstellbar sind,

- daß die Programmschaltung (29) einen nach einem bestimmten Wählerschritt (46) rückgeführten elektronischen Wähler (42) enthält, der von einer Zeilenauswahlschaltung (38) jeweils bei einer bestimmten Videozeile um einen Schritt weitergeschaltet wird,

- und daß der elektronische Wähler ausgangsseitig so mit der Gleichstrom- oder Gleichspannungsquelle verbunden ist, daß jedem Wählerschritt ein bestimmter Versatz des übertragenen Videosignals (S(BAS)) zugeordnet ist.

10. Anordnung nach Anspruch 8, **dadurch gekennzeichnet,**

- daß der Frequenzmodulator (50) der Modulatoranordnung (10) mehrere die Modulationsfrequenz bestimmende Kondensatoren (51, 52, 53) enthält, deren Kapazität so bemessen ist, daß sie bei ihrer Anschaltung im Frequenzmodulator den ihnen jeweils zugeordneten, bestimmten Frequenzversatz (Df1, Df2) erzeugen,

- daß die Programmschaltung (29) einen nach einem bestimmten Wählerschritt (46) rückgeführten elektronischen Wähler (42) enthält, der von einer Zeilenauswahlschaltung (38) jeweils bei einer bestimmten Videozeile (35) einen Schritt weitergeschaltet wird,

- und daß der elektronische Wähler so mit den die Modulatorfrequenz bestimmenden Kondensatoren des Frequenzmodulators verbunden ist, daß jedem Wählerschritt (44, 45, 46) ein bestimmter Kondensator (51, 52, 53) zugeordnet ist.

11. Anordnung zur Wiedergabe einer nach dem Verfahren der Ansprüche 1 bis 7 auf einen bandförmigen Aufzeichnungsträger aufgezeichneten Videoinformation, von denen die in Frequenzmodulation in einem bestimmten Aufzeichnungsfrequenzband aufgezeichneten Videoinformation in einem Frequenzdemodulator demoduliert werden, **dadurch gekennzeichnet,** daß im Signalweg (86) hinter dem Ausgang des Frequenzdemodulators (81) eine Klemmschaltung (82) angeordnet ist, an die eine von den Synchronsignalen (S(Sync)) der abgetasteten Videoinformation gesteuerte Zeilenauswahlschaltung (38) während eines bestimmten Zeilenausschnittes (T(K1)) bestimmter Videozeilen (35.4...35.6) im Zeitbereich des Versatzes eines Aufzeichnungsfrequenzbandes (11′) eine bestimmte Klemmspannung (U(RP)) anlegt.

12. Anordnung nach Anspruch 11, **dadurch gekennzeichnet,** daß die Klemmschaltung (82) eine bestimmte Zeitkonstante zur Einstellung der Klemmspannung (U(RP)) enthält.

13. Anordnung nach dem Oberbegriff des Anspruches 11, **dadurch gekennzeichnet,**

- daß der Frequenzdemodulator (61) mehrere die Demodulationskennlinien (62, 63, 64) des Frequenzdemodulators bestimmende Kondensatoren (65, 66, 67) enthält, deren Kapazität so bemessen ist, daß sie bei ihrer Anschaltung im Frequenzdemodulator jeweils einen ihnen zugeordneten, bestimmten Frequenzversatz erzeugen, und

- daß eine Programmschaltung einen auf einen bestimmten Wählerschritt setzbaren elektronischen Wähler (69) enthält, der von den Schaltsignalen einer Zeilenauswahlschaltung (38) geschaltet wird und der so mit den die Modulationsfrequenz bestimmenden Kondensatoren verbunden ist, daß jedem Wählerschritt ein bestimmter Kondensator zugeordnet ist.

Fig. 1

S(BAS)

6

4    1. Vollbild    5

1. Halbbild    2. Halbb.    1. Halbb.    2. Halbb.    1. Halbb.    2. Halbb.    1. Halbb.

2. Vollbild    3. Vollbild    4. Vollbild    a)

(36)

S(Sync)    b)
t

S(Df)

S(Df1)    S(Df2)    c)
t

t

11'    11"

11    Df2    d)

Df1    t

a1    e)
a2

EP 0 385 163 A1

Fig. 2

Fig. 3

Fig. 4

Fig.5

EP 0 385 163 A1

Fig 6

Fig. 7

Fig.8

Fig 9

Fig 10

Fig 11

a)

b)

c)

G. Reime - 13
RP/TPN; 14.2.89

EP 0 385 163 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | <u>AT - B - 370 937</u><br>(SONY)<br>    * Fig. 4; Seite 3, Zeile 18<br>    - Seite 4, Zeile 22 *<br>    -- | 1,2,4,<br>5,8,9,<br>11 | H 04 N 9/80 |
| Y | <u>US - A - 4 614 980</u><br>(NINDMIYA)<br>    * Fig. 1,19; Spalte 3, Zeile<br>    63 - Spalte 4, Zeile 8;<br>    Spalte 4, Zeilen 19-54 *<br>    -- | 1,2,4,<br>5,8,9,<br>11 | |
| A | <u>AT - B - 376 098</u><br>(SONY)<br>    * Fig. 2,3,6; Seite 5, Zeile<br>    48 - Seite 6, Zeile 15 *<br>    ---- | 1,2,8 | |

RECHERCHIERTE
SACHGEBIETE (Int Cl⁵)

H 04 N 9/00
H 04 N 5/00

Der vorliegende Recherchenbericht wurde für alle Patentansprüche erstellt.

| Recherchenort | Abschlußdatum der Recherche | Prüfer |
|---|---|---|
| WIEN | 30-05-1990 | DIMITROW |